# EUROPÄISCHE PATENTSCHRIFT

(11) **EP 2 218 929 B1**
(45) Veröffentlichungstag und Bekanntmachung des Hinweises auf die Patenterteilung: **04.04.2012**
(21) Anmeldenummer: 10001433.1
(22) Anmeldetag: 11.02.2010
(51) Int. Cl.: F16C 33/20

(54) **Gleitlagerverbundwerkstoff**
Sliding bearing compound material
Matière première composite de pallier lisse

(30) Priorität: 13.02.2009 DE 102009010459
(43) Veröffentlichungstag der Anmeldung: 18.08.2010
(73) Patentinhaber: KS Gleitlager GmbH, 68789 St. Leon-Rot (DE)
(72) Erfinder: Reinicke, Rolf, 76669 Bad Schönborn (DE); Pastemak, Axel, 76669 Bad Schönborn (DE); Taipalus, Riitta, 67117 Limburgerhof (DE)
(74) Vertreter: Dreiss

(56) Entgegenhaltungen:
- DE-A1-102005 009 552
- DE-C1- 4 430 474
- US-A- 3 616 188
- US-B1- 6 726 994

## Beschreibung

Die Erfindung betrifft einen Gleitlagerverbundwerkstoff mit einer metallischen Trägerschicht und einer dem Gleitpartner zugewandten Kunststoffgleitschicht aus einem polymeren Material einer Zugfestigkeit von vorzugsweise wenigstens 50 MPa, welches vorzugsweise die tribologischen Eigenschaften beeinflussende Füllstoffe enthält.

Derartige Gleitlagerverbundwerkstoffe sind bekannt. Zur Verankerung der Kunststoffgleitschicht wird typischerweise eine poröse zusätzliche Schicht, zumeist in Form einer auf die metallische Trägerschicht aufgesinterten Bronzeschicht, verwendet.

Es wurden auch von der Firma Norton Pampus nicht gattungsgemäße eher folienartige Werkstoffe vorgeschlagen, bei denen eine PTFE-basierte Kunststoffgleitschicht über eine PFA-Folie auf einen metallischen Träger aufgeklebt wurde. Diese Werkstoffe sind jedoch für weniger beanspruchte und weniger belastete Anwendungen mit geringerer Präzisionsanforderung gedacht als hier in Rede stehende gattungsgemäße Gleitlagerverbundwerkstoffe.

Aus US-A-5,971,617 ist ein Gleitlagerverbundwerkstoff bekannt mit einer metallischen Trägerschicht und einer dem Gleitpartner zugewandten Kunststoffgleitschicht aus einem polymeren Material, welches vorzugsweise die tribologischen Eigenschaften beeinflussende Füllstoffe enthält. Bei der metallischen Trägerschicht sind erhabene Strukturen vorgesehen, die die Verankerung der Kunststoffgleitschicht unterstützen sollen.

Der im Hinblick auf die Erfindung in Rede stehende Gleitlagerverbundwerkstoff soll insbesondere für höher belastete Anwendungen mit hoher Präzisionsanforderung und enger Wanddickentoleranz der hieraus hergestellten Gleitlagerelemente konzipiert werden, also beispielsweise zur Herstellung von Anlaufscheiben oder Lagerschalen oder Lagerbuchsen für Starter, Einspritzpumpen, Sitzversteller und dergleichen Anwendungen Verwendung finden.

Der vorliegenden Erfindung liegt die Aufgabe zugrunde, einen Gleitlagerverbundwerkstoff der eingangs genannten Art weiter im Hinblick auf eine kostengünstige Herstellbarkeit und eine Reduzierung der Abmessungen zu verbessern.

Diese Aufgabe wird bei einem Gleitlagerverbundwerkstoff der genannten Art erfindungsgemäß dadurch gelöst, daß die metallische Trägerschicht auf ihrer der Kunststoffgleitschicht zugewandten Seite in der noch unbeschichteten Oberfläche der Trägerschicht Vertiefungen mit einer Tiefe (a) ausgehend vom unstrukturierten Oberflächenniveau von 20 - 200 µm und einer Breite (b) von 20 - 100 µm aufweist und dass die Vertiefungen von Schmelzaufwerfungen flankiert sind, deren Höhe (c) oberhalb des unstrukturierten Oberflächenniveaus 10 - 100 µm und deren Breite (d) 10 - 80 µm beträgt, und dass die Vertiefungen und/oder die Schmelzaufwerfungen Hinterschnitte zur Oberflächennormalen für das nach Herstellung der Vertiefungen direkt und unmittelbar im flüssigen, schmelzflüssigen oder erweichten Zustand auf die metallische Trägerschicht aufgebrachte und dabei in die Vertiefungen der Trägerschicht eingedrückte polymere Material bilden. Das polymere Material kann insbesondere ein thermoplastisches oder ein duroplastisches Material sein.

Es wird also erfindungsgemäß vorgeschlagen, auf eine zusätzliche dreidimensional poröse Haftvermittlerschicht, die bei bekannten Gleitlagerverbundwerkstoffen typischerweise durch eine poröse aufgesinterte Bronzeschicht bereitgestellt wurde, zu verzichten und die Anbindung der Kunststoffgleitschicht an die metallische Trägerschicht durch eine dreidimensionale Oberflächenstrukturierung bei der metallischen Trägerschicht zu realisieren. Es wurde überraschenderweise festgestellt, dass eine Kunststoffgleitschicht, deren polymere Komponente vorzugsweise eine Festigkeit von wenigstens 50 MPa aufweist (bestimmt nach DIN/ISO 527), auch ohne dreidimensional poröse Haftvermittlerschicht auf der metallischen Trägerschicht gehalten werden kann, wenn sie im flüssigen, schmelzflüssigen oder erweichten Zustand des polymeren Materials in die genannten Vertiefungen hineingedrückt wurde.

Die Vertiefungen und die sie flankierenden
Schmelzaufwerfungen werden vorzugsweise durch Lasertechnik hergestellt.

Nach einer bevorzugten Ausführungsform der Erfindung beträgt die Tiefe (a) der Vertiefungen 20 - 100 µm, insbesondere 20 - 80 µm. Ihre Breite (b) beträgt vorzugsweise 20 - 80 µm, insbesondere 20 - 60 µm. Die Höhe der Schmelzaufwerfungen beträgt vorzugsweise 10 - 80 µm, insbesondere 10 - 60 µm, und deren Breite beträgt vorzugsweise 10 - 60 µm, insbesondere 10 - 50 µm. Die vorgenannten Abmessungen werden ausgehend von bzw. in dem unstrukturierten Oberflächenniveau der Trägerschicht bestimmt.

Die Vertiefungen sind vorzugsweise linienförmig kontinuierlich erstreckt ausgebildet. Hierbei können auch einander kreuzende Vertiefungen vorgesehen sein.

Des Weiteren erweist es sich als vorteilhaft, wenn die lichte Öffnungsfläche der Vertiefungen (in der Ebene des unstrukturierten Oberflächenniveaus) einen Flächenanteil an der Oberfläche der Trägerschicht von 5 - 45 %, insbesondere von 5 - 30 % aufweist.

Die erwähnten Vertiefungen können dabei eine reguläre Geometrie aufweisen, sie können also im Querschnitt insbesondere kastenförmig oder sich keil- oder trapezförmig verjüngend ausgebildet sein. Aufgrund ihrer bevorzugten Herstellung durch Lasertechnik, also durch Aufschmelzen des Metalls der Trägerschicht vor der Beschichtung, ist die tatsächliche Struktur nicht streng regulär wie bei einem Prägevorgang sondern sie ist von irregulären Strukturen überlagert. Dies gilt insbesondere für die die Vertiefungen flankierenden Schmelzaufwerfungen.

Bei der metallischen Trägerschicht kann es sich typischerweise um eine Stahlschicht handeln; abweichend hiervon können aber zumindest grundsätzlich auch Bronze, Messing- oder Aluminiumwerkstoffe eingesetzt werden.

Bei dem polymeren Material handelt es sich vorzugsweise um ein thermoplastisches Material oder um ein duroplastisches Material. Thermoplastisches Material wird vorzugsweise im schmelzflüssigen oder erweichten Zustand aufgebracht. Ein duroplastisches Material kann auch als zuvor angemischte Flüssigkeit aufgebracht und dann ausgehärtet werden.

Das polymere Material der Kunststoffgleitschicht weist bevorzugtermaßen eine Zugfestigkeit von wenigstens 50 MPa, insbesondere von 50 - 250 MPa und weiter insbesondere von wenigstens 50 - 150 MPa auf.

Es kann in vorteilhafter Weise PPS, PA, PAEK, PEEK, PEI, PES, POM, PPA, fluorhaltige Kunststoffe, wie PVDF, PFA, ECTFE, PFE, FEP, PCTFE sowie teilkristalline Polymere (LCP) einzeln oder in Mischung umfassen. Bevorzugt sind allerdings PPS, PA, PEEK, und PPA einzeln oder in Mischung.

Die Kunststoffgleitschicht wird neben dem matrixbildenden Kunststoffmaterial vorzugsweise die tribologischen Eigenschaften, insbesondere die Verschleißbeständigkeit und das Reibverhalten, und die Belastbarkeit positiv beeinflussende Füllstoffe aufweisen. Als Füllstoffe kommen insbesondere und bevorzugtermaßen in Frage: PTFE, Graphit, Aramid, PEEK, PI, Glimmer oder Fe₂O₃, jeweils als Partikel oder Fasern, oder Kohlenstofffasern.

Weiter kann es sich als vorteilhaft erweisen, wenn als weitere Füllstoffe haftvermittelnde Polymere, wie PFA, FEP, PES, PESU mit einem Volumenanteil von bis zu 10 % beigemischt sind.

Haftvermittelnde Polymere, wie PFA, FEP, PES, PESU, können insbesondere in Form einer Dispersion, in Folienform oder in Pulverform, auf die mit Vertiefungen ausgebildete metallische Trägerschicht aufgebracht werden und beim Beschichten der Trägerschicht mit polymerem Kunststoffmaterial zur Herstellung der Kunststoffgleitschicht in einer Kontaktzone von Kunststoffgleitschicht und Trägerschicht angeordnet bzw. angereichert sein.

Der Füllstoffgehalt der Kunststoffgleitschicht liegt insbesondere bei 10 bis 50 Gew.-%, insbesondere bei 10 - 40 Gew.-% und weiter insbesondere bei 10 - 30 Gew.-% bezogen auf die Masse der Kunststoffgleitschicht.

Des Weiteren erweist es sich als vorteilhaft, wenn die ZugScherfestigkeit der aufgebrachten Kunststoffgleitschicht wenigstens 10 MPa beträgt, bestimmt nach DIN EN 1465.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Gleitlagerverbundwerkstoffs. In der Zeichnung zeigt:

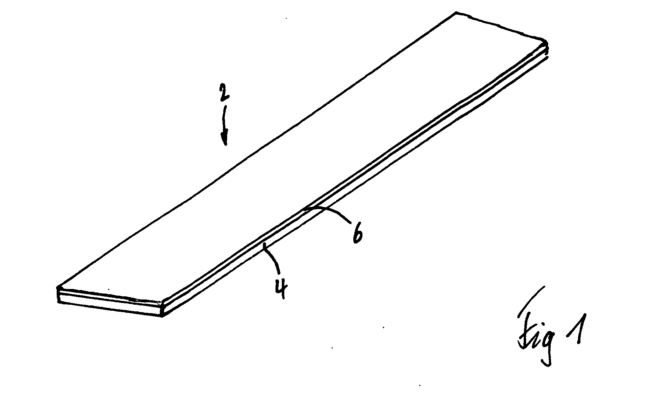

- Figur 1: eine schematische Ansicht eines streifenförmigen erfindungsgemäßen Gleitlagerverbundwerkstoffs bestehend aus einer metallischer Trägerschicht und einer Kunststoffgleitschicht; und

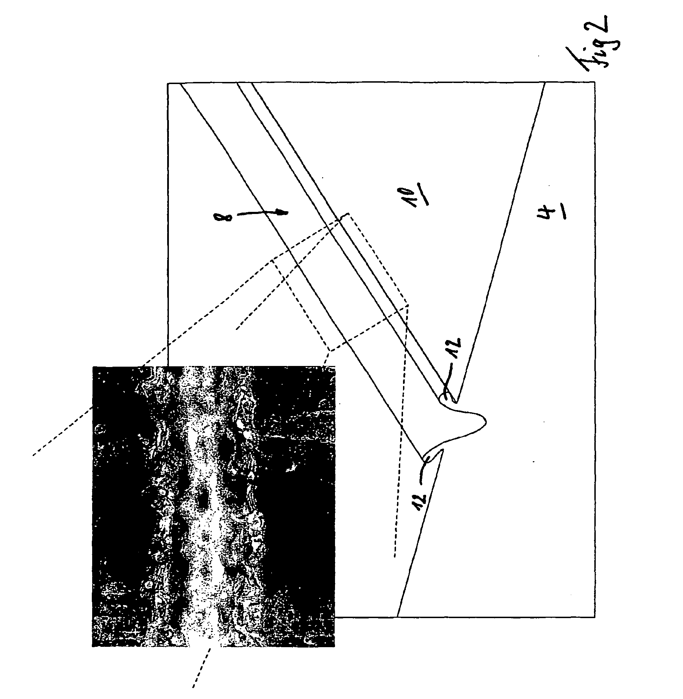

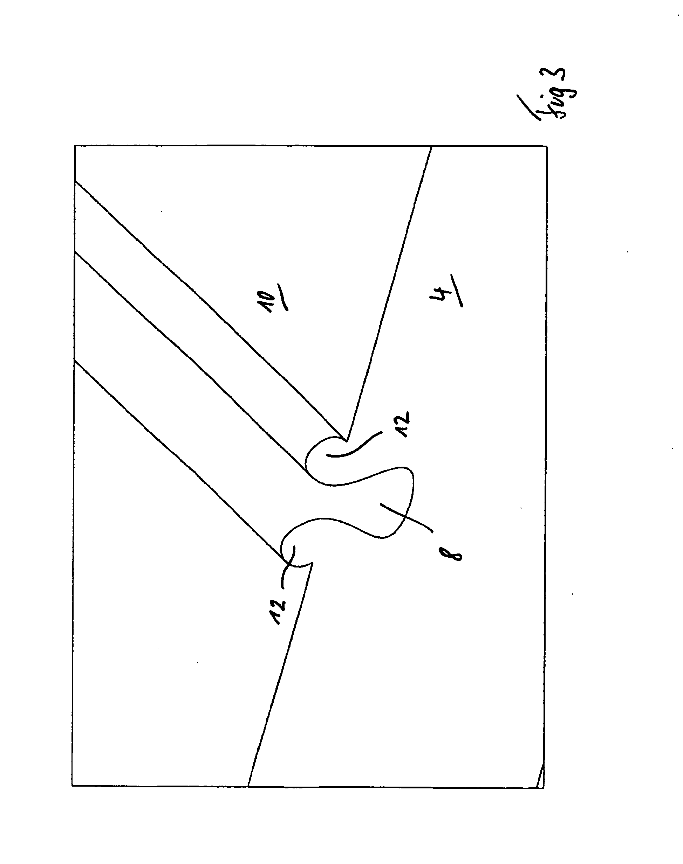

- Figuren: 2, 3, 4 eine schematische Darstellung von möglichen Geometrien der in der metallischen Trägerschicht ausgebildeten Vertiefungen;
- Figuren: 5,6 eine schematische Schnitt-Darstellung der Geometrien nach Figuren 2, 3;
- Figur 7: eine schematische Schnittansicht eines erfindungsgemäßen Gleitlagerverbundwerkstoffs bestehend aus einer metallischer Trägerschicht und einer Kunststoffgleitschicht; und
- Figur 8: Darstellungen des Verlaufs verschiedener Vertiefungen in der Oberfläche der Trägerschicht.

Figur 1 zeigt eine schematische Ansicht eines Gleitlagerverbundwerkstoffs in Form eines endlosen oder abgelängt dargestellten streifenförmigen Abschnitts bestehend aus einer metallischen Trägerschicht 4 aus Stahl und einer darauf direkt und unmittelbar aufgebrachten Kunststoffgleitschicht 6. Aus einem solchen Abschnitt eines Gleitlagerverbundwerkstoffs 2 lassen sich in Stanz/Biege/Kalibrier-Prozessen Gleitlagerschalen und Gleitlagerbuchsen fertigen.

### Im Unterschied zu herkömmlichen

Gleitlagerverbundwerkstoffen umfasst der erfindungsgemäße Gleitlagerverbundwerkstoff 2 keine zusätzliche dreidimensionale poröse Verankerungsschicht für das polymere, insbesondere thermoplastische Material der Kunststoffgleitschicht, sondern die Kunststoffgleitschicht 6 ist direkt und unmittelbar auf die aus Stahl bestehende Trägerschicht 4 aufgebracht.

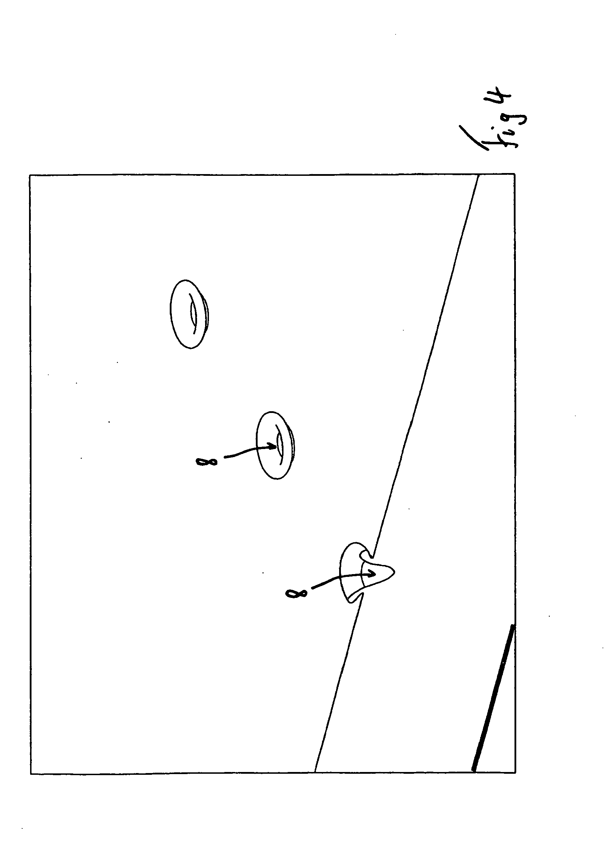

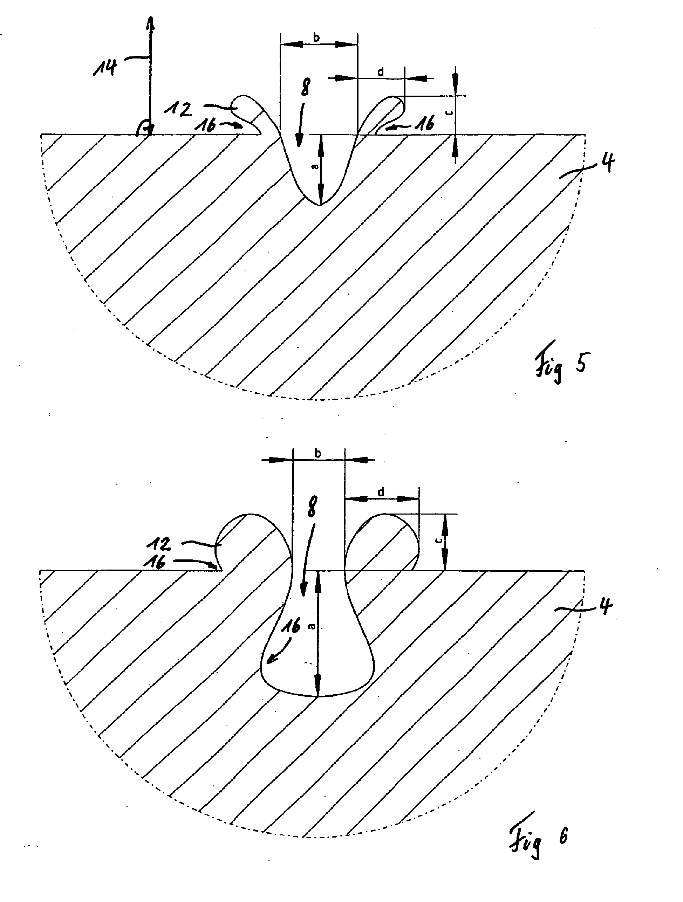

Um eine für hier in Rede stehende Anwendungen hinreichende Haftfestigkeit und Dauergebrauchstauglichkeit des Gleitlagerverbundwerkstoffs und hieraus hergestellter Gleitlagerelemente zu erreichen, wurden in der der Kunststoffgleitschicht 6 zugewandten noch unbeschichteten Oberfläche der Trägerschicht 4, insbesondere durch Lasertechnik, Vertiefungen mit die Vertiefungen flankierenden Schmelzaufwerfungen hergestellt. Figuren 2 und 3 zeigen eine schematische perspektivische Ansicht der Ausbildung einer kontinuierlichen linienförmig erstreckten Vertiefung 8 in der Oberfläche 10 der metallischen Trägerschicht 4. In Figur 2 ist zusätzlich dargestellt eine fotografische Aufsicht auf einen Ausschnitt der Vertiefung 8. Man erkennt die durch den Herstellprozess bedingte irreguläre Überlagerung der regulären Struktur der Vertiefung 8, und zwar insbesondere im Bereich der die Vertiefung 8 flankierenden Schmelzaufwerfung 12. Figur 4 zeigt eine eher punktförmige Vertiefung. Figuren 5 und 6 zeigen entsprechende schematische Schnittansichten der Trägerschicht 4 im Bereich von Vertiefungen 8 mit Abmessungen der Vertiefungen 8 und der flankierenden Schmelzaufwerfungen 12.

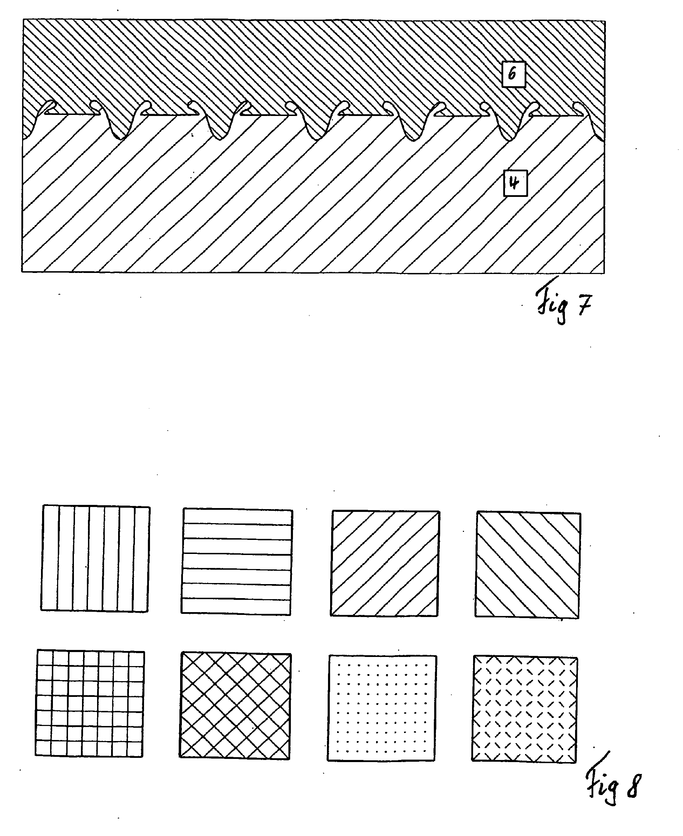

Es erweist sich als besonders vorteilhaft, wenn die Vertiefungen 8 und/oder die sie flankierenden Aufwerfungen 12 nicht lediglich von einer irregulären spratzigen und damit mit einer sehr großen Oberfläche versehenen Struktur überlagert sind, so wie sich dies nur durch eine fotografische Darstellung, wie beispielsweise in Figur 2, grafisch darstellen lässt, sondern wenn die Vertiefungen 8 und/oder die Schmelzaufwerfungen 12 in Bezug auf eine Flächennormale 14 zur Oberfläche 10 der metallischen Trägerschicht 4 Hinterschnitte 16 für die Verklammerung des polymeren Materials der Kunststoffgleitschicht 6 aufweisen. Somit wird die Verankerung des polymeren Materials nicht nur durch die durch Vertiefungen und Schmelzaufwerfungen verursachte enorme Oberflächenvergrößerung, sondern auch durch eine formschlüssig wirkende Anbindung im Bereich der Hinterschnitte 16 an der metallischen Trägerschicht 4 unterstützt bzw. bewirkt. Dies ist zumindest schematisch stark vereinfacht in der Schnittdarstellung durch einen erfindungsgemäßen Gleitlagerverbundwerkstoff gemäß Figur 7 dargestellt. Hierfür ist ein thermoplastisches, tribologisch optimiertes, das heißt, die tribologischen Eigenschaften beeinflussende Füllstoffe umfassendes Kunststoffmaterial zur Ausbildung der Kunststoffgleitschicht 6 unter Wärme und Druck auf die zuvor mit Vertiefungen 8 und Schmelzaufwerfungen 12 strukturierte Oberfläche der metallischen Trägerschicht 4 auflaminiert oder als duroplastisches Material flüssig aufgebracht und ausgehärtet. Es erweist sich hierbei als vorteilhaft, dass die Vertiefungen 8 und die Hinterschnitte 16 vorzugsweise wenigstens nahezu vollständig befüllt bzw. mit polymerem Material umflossen sind, damit vorzugsweise sämtliche Kavitäten gefüllt werden, was auch für eine hochpräzise maßhaltige Fertigung des Gleitlagerverbundwerkstoffs wesentlich ist.

Figur 8 zeigt Darstellungen des Verlaufs verschiedener Vertiefungen in der Oberfläche der Trägerschicht. Obschon an sich alle Strukturierungen möglich sind, wird den linear und kontinuierlich erstreckten Strukturierungen der Vorzug gegeben.

## Patentansprüche

1. Gleitlagerverbundwerkstoff (2) mit einer metallischen Trägerschicht (4), insbesondere aus Stahl, und einer dem Gleitpartner zugewandten Kunststoffgleitschicht (6) aus einem polymeren Material einer Zugfestigkeit von vorzugsweise wenigstens 50 MPa, welches vorzugsweise die tribologischen Eigenschaften beeinflussende Füllstoffe enthält, **dadurch gekennzeichnet, dass** die metallische Trägerschicht (4) auf ihrer der Kunststoffgleitschicht (6) zugewandten Seite in der noch unbeschichteten Oberfläche (10) der Trägerschicht (10) Vertiefungen (8) mit einer Tiefe (a) ausgehend vom unstrukturierten Oberflächenniveau von 20 - 200 µm und einer Breite (b) von 20 - 100 µm aufweist und dass die Vertiefungen (8) von Schmelzaufwerfungen (12) flankiert sind, deren Höhe (c) oberhalb des unstrukturierten Oberflächenniveaus 10 - 100 µm und deren Breite (d) 10 - 80 µm beträgt, und dass die Vertiefungen (8) und/oder die Schmelzaufwerfungen (12) Hinterschnitte (16) zur Oberflächennormalen (14) für das nach Herstellung der Vertiefungen (8) direkt und unmittelbar im flüssigen, schmelzflüssigen oder erweichten Zustand auf die metallische Trägerschicht (4) aufgebrachte und dabei in die Vertiefungen (8) der Trägerschicht (4) eingedrückte polymere Material bilden.

2. Gleitlagerverbundwerkstoff nach Anspruch 1, **dadurch gekennzeichnet, dass** die Tiefe (a) der Vertiefungen (8) 20 - 100 µm, insbesondere 20 - 80 µm beträgt.

3. Gleitlagerverbundwerkstoff nach Anspruch 1 oder 2, **dadurch gekennzeichnet, dass** die Breite (b) der Vertiefungen (8) 20 - 80 µm, insbesondere 20 - 60 µm beträgt.

4. Gleitlagerverbundwerkstoff nach einem oder mehreren der vorstehenden Ansprüche, **dadurch gekennzeichnet, dass** die Höhe (c) der Schmelzaufwerfungen (12) 10 - 80 µm, insbesondere 10 - 60 µm beträgt.

5. Gleitlagerverbundwerkstoff nach einem oder mehreren der vorstehenden Ansprüche, **dadurch gekennzeichnet, dass** die Breite (d) der Schmelzaufwerfungen (12) 10 - 60 µm, insbesondere 10 - 50 µm beträgt.

6. Gleitlagerverbundwerkstoff nach einem oder mehreren der vorstehenden Ansprüche, **dadurch gekennzeichnet, dass** die Vertiefungen (8) linienförmig kontinuierlich erstreckt sind.

7. Gleitlagerverbundwerkstoff nach einem oder mehreren der vorstehenden Ansprüche, **dadurch gekennzeichnet, dass** die lichte Öffnungsfläche der Vertiefungen (8) einen Flächenanteil an der Oberfläche (10) der Trägerschicht (4) von 5 - 45 %, insbesondere von 5 - 30 % aufweist.

8. Gleitlagerverbundwerkstoff nach einem oder mehreren der vorstehenden Ansprüche, **dadurch gekennzeichnet, dass** die Vertiefungen (8) eine reguläre Geometrie aufweisen, also insbesondere kastenförmig oder sich keil- oder trapezförmig verjüngend ausgebildet sind.

9. Gleitlagerverbundwerkstoff nach einem der vorstehenden Ansprüche, **dadurch gekennzeichnet, dass** das polymere Material eine Zugfestigkeit von wenigstens 50 MPa, insbesondere von 50 - 250 MPa und weiter insbesondere von wenigstens 50 - 150 MPa aufweist.

10. Gleitlagerverbundwerkstoff nach einem der vorstehenden Ansprüche, **dadurch gekennzeichnet, dass** das polymere Material PPS, PA, PEEK, oder PPA einzeln oder in Mischung umfasst.

11. Gleitlagerverbundwerkstoff nach einem der vorstehenden Ansprüche, **dadurch gekennzeichnet, dass** als Füllstoffe PTFE, Graphit, Aramid, PEEK, PI, Glimmer oder Fe₂O₃, als Partikel oder Fasern, oder Kohlenstofffasern enthalten sind.

12. Gleitlagerverbundwerkstoff nach einem der vorstehenden Ansprüche, **dadurch gekennzeichnet, dass** als weitere Füllstoffe haftvermittelnde Polymere, wie PFA, FEP, PES, PESU mit einem Volumenanteil von bis zu 10 % beigemischt sind.

13. Gleitlagerverbundwerkstoff nach einem der vorstehenden Ansprüche, **dadurch gekennzeichnet, dass** haftvermittelnde Polymere, wie PFA, FEP, PES, PESU, insbesondere in Form einer Dispersion, in Folienform oder in Pulverform, auf die mit Vertiefungen ausgebildete metallische Trägerschicht (4) aufgebracht und beim Beschichten der Trägerschicht (4) mit polymerem Kunststoffmaterial zur Herstellung der Kunststoffgleitschicht (6) somit in einer Kontaktzone der Kunststoffgleitschicht (6) zur Trägerschicht angeordnet sind.

14. Gleitlagerverbundwerkstoff nach einem der vorstehenden Ansprüche, **dadurch gekennzeichnet, dass** die Füllstoffe 10 - 50 Gew.-%, insbesondere 10 - 40 Gew.-% und weiter insbesondere 10 - 30 Gew.-% der Kunststoffgleitschicht (6) ausmachen.

15. Gleitlagerverbundwerkstoff nach einem der vorstehenden Ansprüche, **dadurch gekennzeichnet, dass** die ZugScherfestigkeit der Kunststoffgleitschicht (6) wenigstens 10 MPa beträgt.

## Claims

1. Composite plain bearing material (2) with a metallic substrate (4), in particular, of steel, and a plastic bearing layer (6) facing the mating surface and made from a polymeric material with a tensile strength of preferably at least 50 MPa, which contains preferably filler materials influencing the tribological properties, **characterised in that** the metallic substrate (4) has, on its side facing the plastic bearing layer (6), recesses (8) in the still uncoated surface (10) of the substrate (10) with a depth (a) measured from the unstructured surface level of 20 - 200 µm and a width (b) of 20 - 100 µm and that the recesses (8) have raised fused flanks (12) whose height (c) is 10 - 100 µm above the unstructured surface level and whose width (d) is 10 - 80 µm, and that the recesses (8) and/or the raised fused flanks (12) form undercuts (16) to the surface normals (14) for the polymeric material applied directly and immediately in a fluid, molten or softened state to the metallic substrate (4) after manufacture of the recesses (8) and thereby pressed into the recesses (8) in the substrate (4).

2. Composite plain bearing material in accordance with claim 1, **characterised in that** the depth (a) of the recesses (8) is 20 - 100 µm, in particular 20 - 80 µm.

3. Composite plain bearing material in accordance with claim 1 or 2, **characterised in that** the width (b) of the recesses (8) is 20 - 80 µm, in particular 20 - 60 µm.

4. Composite plain bearing material in accordance with one or more of the previous claims, **characterised in that** the height (c) of the raised fused flanks (12) is 10 - 80 µm, in particular 10 - 60 µm.

5. Composite plain bearing material in accordance with one or more of the previous claims, **characterised in that** the width (d) of the raised fused flanks (12) is 10 - 60 µm, in particular 10 - 50 µm.

6. Composite plain bearing material in accordance with one or more of the previous claims, **characterised in that** the recesses (8) are extended linearly and continuously.

7. Composite plain bearing material in accordance with one or more of the previous claims, **characterised in that** the clear opening area of the recesses (8) constitutes a proportion by area of the surface (10) of the substrate (4) of 5 - 45 %, in particular of 5 - 30 %.

8. Composite plain bearing material in accordance with one or more of the previous claims, **characterised in that** the recesses (8) exhibit a regular geometry, in which they are formed, in particular, to taper in the shape of a box, wedge or trapeze.

9. Composite plain bearing material in accordance with one of the previous claims, **characterised in that** the polymeric material has a tensile strength of at least 50 MPa, in particular of 50 - 250 MPa and further in particular of at least 50 - 150 MPa.

10. Composite plain bearing material in accordance with one of the previous claims, **characterised in that** the polymeric material consists of PPS, PA, PEEK or PPA alone or mixed.

11. Composite plain bearing material in accordance with one of the previous claims, **characterised in that** the contained filler materials can be PTFE, graphite, aramid, PEEK, PI, mica or Fe₂O₃ as particles or fibres, or carbon fibres.

12. Composite plain bearing material in accordance with one of the previous claims, **characterised in that** adhesion-enhancing polymers such as PFA, FEP, PES, PESU can be admixed in a volumetric proportion of up to 10 % as other filler materials.

13. Composite plain bearing material in accordance with one of the previous claims, **characterised in that** adhesion-enhancing polymers such as PFA, FEP, PES, PESU, in particular in the form of a dispersion, in film form or in powder form, are applied to the metallic substrate (4) formed with recesses and are therefore positioned, during the coating of the substrate (4) with polymeric plastic material to produce the plastic bearing layer (6), in a zone where the plastic bearing layer (6) contacts the substrate.

14. Composite plain bearing material in accordance with one of the previous claims, **characterised in that** the filler materials constitute 10 - 50 % by weight, in particular 10 - 40 % by weight, and, further in particular 10 - 30 % by weight of the plastic bearing layer (6).

15. Composite plain bearing material in accordance with one of the previous claims, **characterised in that** the tensile shear strength of the plastic bearing layer (6) is at least 10 MPa.

## Revendications

1. Matériau composite pour palier lisse (2) avec une couche support métallique (4), notamment en acier, et, en regard de l'élément de glissement antagoniste, une couche de glissement en matière plastique (6) composée d'un matériau polymère présentant une résistance à la traction de préférence supérieure ou égale à 50 MPa, lequel matériau contient de préférence des charges influant sur les propriétés tribologiques, **caractérisé en ce que** la couche support métallique (4) présente, au niveau de la surface non encore revêtue (10) de sa face en regard de la couche de glissement en matière plastique (6), des creux (8) d'une profondeur (a), mesurée à partir du niveau de la surface non structurée, comprise entre 20 et 200 µm et d'une largeur (b) comprise entre 20 et 100 µm, et **en ce que** les creux (8) sont flanqués d'amoncellements de masse fondue (12) dont la hauteur (c) au-dessus du niveau de la surface non structurée est comprise entre 10 et 100 µm et dont la largeur (d) est comprise entre 10 et 80 µm, et **en ce que** les creux (8) et/ou les amoncellements de masse fondue (12) forment des contre-dépouilles (16) par rapport à la normale à la surface (14) pour le matériau polymère qui, après obtention des creux (8), est appliqué directement ou indirectement à l'état liquide, fondu ou ramolli, sur la couche support métallique (4) et est alors enfoncé dans les creux (8) de la couche support (4).

2. Matériau composite pour palier lisse selon la revendication 1, **caractérisé en ce que** la profondeur (a) des creux (8) est comprise entre 20 et 100 µm, notamment entre 20 et 80 µm.

3. Matériau composite pour palier lisse selon la revendication 1 ou la revendication 2, **caractérisé en ce que** la largeur (b) des creux (8) est comprise entre 20 et 80 µm, notamment entre 20 et 60 µm.

4. Matériau composite pour palier lisse selon une ou plusieurs des revendications précédentes, **caractérisé en ce que** la hauteur (c) des amoncellements de masse fondue (12) est comprise entre 10 et 80 µm, notamment entre 10 et 60 µm.

5. Matériau composite pour palier lisse selon une ou plusieurs des revendications précédentes, **caractérisé en ce que** la largeur (d) des surélévations (12) est comprise entre 10 et 60 µm, notamment entre 10 et 50 µm.

6. Matériau composite pour palier lisse selon une ou plusieurs des revendications précédentes, **caractérisé en ce que** les creux (8) s'étendent de manière linéaire et continue.

7. Matériau composite pour palier lisse selon une ou plusieurs des revendications précédentes, **caractérisé en ce que** l'ouverture des creux (8) représente entre 5 et 45 %, notamment entre 5 et 30 % de la surface (10) de la couche support (4).

8. Matériau composite pour palier lisse selon une ou plusieurs des revendications précédentes, **caractérisé en ce que** les creux (8) présentent une géométrie régulière, et affectent donc une forme notamment parallélépipédique ou une forme effilée en coin ou en trapèze.

9. Matériau composite pour palier lisse selon l'une quelconque des revendications précédentes, **caractérisé en ce que** le matériau polymère présente une résistance à la traction d'au moins 50 MPa, en particulier de 50 à 250 MPa et de manière préférentielle d'au moins 50 à 150 Mpa.

10. Matériau composite pour palier lisse selon l'une quelconque des revendications précédentes, **caractérisé en ce que** le matériau polymère comporte, seuls ou en mélanges, du PPS, du PA, du PEEK ou du PPA.

11. Matériau composite pour palier lisse l'une selon quelconque des revendications précédentes, **caractérisé en ce qu'**il contient comme charge du PTFE, du graphite, de l'aramide, du PEEK, du PI, du mica ou du Fe₂O₃, sous la forme de particules ou de fibres, ou encore des fibres de carbone.

12. Matériau composite pour palier lisse selon l'une quelconque des revendications précédentes, **caractérisé en ce que** sont ajoutés, en tant que charges supplémentaires, des polymères promoteurs d'adhésion tels que PFA, FEP, PES, PESU selon un rapport volumique inférieur ou égal à 10 %.

13. Matériau composite pour palier lisse selon l'une quelconque des revendications précédentes, **caractérisé en ce que** les polymères promoteurs d'adhésion tels que PFA, FEP, PES, PESU, sont appliqués, notamment sous la forme d'une dispersion, d'une pellicule ou de poudre, sur la couche support métallique (4) formée avec des creux et se trouvent donc, lors du revêtement de la couche support (4) avec la matière plastique polymère pour réaliser la couche de glissement en matière plastique (6), dans une zone de contact entre la couche de glissement en matière plastique (6) et la couche support.

14. Matériau composite pour palier lisse selon l'une quelconque des revendications précédentes, **caractérisé en ce que** les charges représentent 10 à 50 % en poids, notamment 10 à 40 % en poids et, de manière préférentielle, 10 à 30 % en poids de la couche de glissement en matière plastique (6).

15. Matériau composite pour palier lisse selon l'une quelconque des revendications précédentes, **caractérisé en ce que** la résistance à la traction en cisaillement de la couche de glissement en matière plastique (6) est supérieure ou égale à 10 MPa.
